# NEW EUROPEAN PATENT SPECIFICATION

(11) **EP 2 832 236 B2**
(45) Date of publication and mention of the opposition decision: **19.10.2022**
(45) Mention of the grant of the patent: 23.03.2016
(21) Application number: 13178511.5
(22) Date of filing: 30.07.2013
(51) Int. Cl.: A23L 33/17, A23J 1/10, A23J 3/30, C08H 1/06

(54) **METHOD FOR PRODUCING HYDROLYSED KERATINACEOUS MATERIAL**
Verfahren zur Herstellung von hydrolysiertem keratinartigem Material
Procédé de production de matériau contenant de la kératine hydrolysée

(43) Date of publication of application: 04.02.2015
(73) Proprietor: Tessenderlo Group NV/SA, 1050 Brussels (BE)
(72) Inventor: Blutel, Philippe, 61400 Saint Hilaire Le Chatel (FR); Fillières, Romain, 27200 Vernon (FR)
(74) Representative: Hoyng Rokh Monegier B.V.

(56) References cited:
- EP-A2- 0 499 260
- WO-A1-89/11797
- WO-A1-90/01023
- WO-A1-2011/003015
- US-A- 4 172 073
- US-A- 4 172 073
- US-A- 4 232 123

## Description

### BACKGROUND OF THE INVENTION

### 1. Field of the Invention

The invention relates generally to a method tor producing hydrolysed keratinaceous material, such as feather meal or meal from hair.

### 2. Description of the Related Art

As a source of keratinaceous material, animal feathers, hair, hoof, nails and the like can be used. Feathers are by-products from poultry, and hair is a by-product from pigs, cattle, sheep and the like. Also hoofs or nails, that may be grinded, can be used as source of keratinaceous material. Such keratinaceous material has a high protein content, consisting of at least 17 amino acids. However, this keratinaceous material is hardly digestible for animals or humans because of the highly structured polypeptides, with the presence of many (di)sulphide bridges.

Many processes exist for producing (partly) hydrolysed keratinaceous material like feathers or hair, in order to increase the digestibility. Known methods include hydrolysis under pressure while using steam, enzymatic hydrolysis or chemical hydrolysis with e.g. base, acid or other reactive agent.

The keratinaceous material generally is not completely hydrolysed to mono-amino acids to improve the digestibility. In many processes, the resultant product from the partial hydrolysis of the keratinaceous material is partly insoluble in water, and may comprise a mixture of liquid (dissolved) and solid (insoluble) material. Generally, the combined product is converted to a dry solid material by a drying technique. The resultant product generally is not fully digestible for animals, according to for example the pepsin and/or ileal digestibility test. Further, it appears that such products can have anti-nutritional compounds, like lanthionine, in significant amounts.

Several examples of methods for producing partially hydrolysed keratinaceous material like feather meal include US5772968, US4286884, US4172073 and WO2011/03015.

### BRIEF SUMMARY OF THE INVENTION

It is an object of the invention to provide a method for producing hydrolysed, partly soluble, solid keratinaceous material, with an improved digestibility.

It is another object of the invention to provide a method for producing hydrolysed, partly soluble, solid keratinaceous material, with a relatively low amount of anti-nutritional compounds like lanthionine.

This object is achieved by a method comprising the steps of partly hydrolysing keratinaceous material in the presence of water with pressure and heat at a pressure below 10 bar, and drying the resultant partially hydrolysed product comprising at least partly insoluble material in a dryer at a temperature such that the keratinaceous material remains at a temperature below 90 °C, preferably below 80 °C, and at a temperature/time/pressure combination which limits the drop in pepsin and/or ileal digestibility by less than 10%, and/or such that the pepsin and/or ileal digestibility remains higher than 85% wherein the resultant hydrolysed keratinaceous material, when 1 gram is put in 2 ml of water, is at least partly insoluble as particles and fibrous material are visible for the human eye.

As it is clear from the molecular weights of the hydrolysed keratinaceous material, the hydrolysis is not a complete chemical hydrolysis to mono-amino acids, but the hydrolysis comprises the hydrolysation of a substantial number of amide bonds in the polypeptides.

The presence of water during the hydrolysation step is meant to be any of liquid phase water, steam, or water absorbed in the keratinaceous material.

Preferably, the drop in pepsin and/or ileal digestibility is less than 7%, more preferably less than 5%, and/or preferably, the pepsin and/or ileal digestibility remains 90% or higher, more preferable, 92% or higher.

In one embodiment the drying process comprises drying at reduced pressure, such that the temperature of the material remains at a temperature below 90 °C, preferably at a temperature of 80 °C or lower, and more preferably at 75 °C or lower, such as for example between 60 to 75 °C, or for example at a temperature of 70 °C or lower.

In another embodiment, the drying process comprises effective turbulence of the keratinaceous material in a flow of hot air, such as in a fluidized bed dryer, ring type dryer, rotating drum dryer and the like (hereinafter denoted as "hot air dryer"). In such cases it is important to limit the heat exposure to a minimum.

It is a further object of the invention to provide a hydrolysed partly soluble keratinaceous material with an improved nutritional value for feed applications.

This object is achieved by providing partly insoluble keratinaceous material with an in vivo digestibility of the Total Nitrogen Matter of more than 80%, preferably of 82% or higher, as measured on cecectomized roosters, which material comprises an amount of lanthionine of less than 2 wt%.

Lanthionine is the dimer of cysteine with a single thio-bridge. Lanthionine is an anti-nutritional compound, and appears to be formed upon drying the partly hydrolysed keratinaceous material. As lanthionine is anti-nutritional, an animal uses a substantial amount of energy to remove such a useless compound from the body. Thereby, lanthionine is counterproductive with respect to the specific aim of supplementing the partly hydrolysed keratinaceous material to an animal.

Lanthionine is one of the most important antinutritional compounds in hydrolysed keratinaceous material. Another antinutritional compound is for example iso-alanine.

It is an important advantage of the present invention, that the formation of lanthionine is reduced compared to hydrolysed keratinaceous material commonly available in the market, like feather meal.

With measuring the ileal and/or pepsin digestibility, and the amount of lanthionine that is formed during the heating step, the average skilled person will be able to optimize drying conditions such that the advantages of the present invention are achieved.

Preferably, the hydrolysis is performed under pressure, while using steam, in a continuous process. However, batch processes exist as well, and are equally applicable.

In one embodiment of the invention, the drying is preferably performed in a disc dryer, at a pressure below 0.4 Bar (abs), while heating the discs to a temperature lower than 160 °C, preferably lower than 140 °C, even more preferably lower than 130 °C.

In an alternative embodiment, the dryer is a hot air dryer, preferably a fluidized bed dryer, keeping the temperature of the outlet gaseous stream below 120 °C, preferably during a period of less than 10 min, and more preferably during a period of less than 5 min.

### DESCRIPTION OF ILLUSTRATIVE EMBODIMENTS

The following is a description of certain embodiments of the invention, given by way of example only and with reference to the examples.

The method according to the present invention comprises the steps of hydrolysing keratinaceous material under pressure with steam at a pressure below 10 bar, and drying the resultant hydrolysed keratinaceous material in a way, such that the keratinaceous meal has a very high digestibility.

One of the steps to achieve such high digestibility is, to keep the keratinaceous material at a temperature below 90 °C, preferably below 80 °C. The upper value of the temperature is dependent on the time period that such high temperature is kept.

In one embodiment of the invention, the drying is performed at reduced pressure. Suitable pressures include a pressure below 0.5 bar (abs), preferably 0.4 bar or lower. At a pressure of e.g. 0.3 bar, water boils at about 70 °C, and thereby the keratinaceous material largely remains at a temperature below the boiling temperature at a certain pressure. An even lower vacuum is also possible, but may have the disadvantage that such low vacuum is relatively expensive to keep. Hence, the reduced pressure generally will be a pressure higher than 10 mbar (abs), and preferably 100 mbar or higher.

In order to allow an economical process, it is important that the equipment or plant for treating the keratinaceous material is able to process 2 ton per hour or more, preferably between 4 and 15 tons. In view of the required high amount of throughput, several drying techniques, like for example drying overnight in a stove are impossible to use. Furthermore freeze drying is preferably not performed, and such drying method preferably is excluded because this is relatively expensive.

Hence, in the present invention, preferably, drying processes are excluded that comprise non-stirred/non-moving drying. Non-stirred or non-moving drying is understood to be a method wherein the keratinaceous material stays substantially on a fixed place, like when an amount of feather meal is placed in an oven at e.g. 50 °C overnight to dry the product or when the product is placed in a freeze drying tunnel.

The keratinaceous material, like feather or hair, is generally wet before supplying the material to the hydrolyser. The amount of water generally is between 30 and 80 wt%, and more preferably between 50 and 75 wt%, and most preferably, between 65 wt% and 75 wt%.

The keratinaceous material may be milled or crushed to reduce the size. Generally, size reduction for hair of pigs or cattle is not very useful.

The hydrolyser generally works at a pressure of 10 bar or below, as higher pressure is increasingly costly. The pressure generally is 2 bar or higher. Higher pressure is preferred, to increase the degree and speed of hydrolysation. Hence, the pressure preferably is 4 bar or higher, and even more preferable, 6 bar or higher. Generally, the pressure will be 9 bar or lower. The pressure is given as bar absolute.

The hydrolysis will be performed in a hydrolyser, generally called a steam-hydrolyser. The hydrolyser is essentially a stirred vessel, and may be batch or continuous. The hydrolyser preferably allows a continuous process, and is a stirred tube like vessel like an extruder. Stirring preferably is done with a slowly propelling screw type of mixer, paddles or the like.

The hydrolysis step generally will be performed for a period between 5 and 180 min, preferably between 10 and 60 min. Lower pressure generally requires longer reaction times.

Hence, the time/pressure window in general would be between 2 to 10 bar during 5 min. to 3 hr, preferably between 4 to 9 bar during 10min to 1 hr.

The steam may be directly injected, or may be used for indirect heating. Indirect heating may also be effected with hot oil coils. Ultimately, the pressure should be as required, and the amount of water preferably is such, that saturated steam is present at the chosen pressure and temperature. Preferably, the amount of steam present is 200 gram of steam or more per kg of feather.

The hydrolysis with such technique always results in only a partial hydrolysis. Hence, the resulting mixture comprises oligo-peptides, and polypeptides.

The hydrolysed keratinaceous material will be dried after the (partial) hydrolysis. This drying generally is done in a number of steps. The first step comprises bringing the mixture leaving the hydrolyser to atmospheric pressure, while evaporating part of the water.

Optionally, it is possible to press part of the water from the keratinaceous material to bring the water content - for example - from 55 wt% or higher to 45 wt%.

The water pressed from the keratinaceous material after the hydrolysis step is generally referred to as stick water. The stick water can be further concentrated by means of evaporators, such as for example multiple effect falling films preferably at reduced pressure, using the hot vapours of the dryer in a combined heat recovery system. Such evaporation will raise the dry substance of the stick waters from 5 to 10% up to 25 to 40%. This concentrate, rich in solubilized and insoluble proteins can be re-injected into the dryer, and processed with the solid keratinaceous material.

In an alternative embodiment, the stick water can be dried as such using suitable drying methods. Suitable drying techniques include a plurality of techniques, such as for example drum drying and spray drying. The dried keratinaceous material can have suitable particle sizes with a D50 between 50 µm to 2 mm, preferably between 0.1 and 1 mm. The product may be granulated to any suitable particle size. Such use of stick water has the advantage of providing a product with a very high digestibility, such as preferably more than 95% ileal and/or pepsin digestibility, more preferably 97% or more.

Therefore, the present invention also relates to a process for preparing highly digestible keratinaceous material in powder form, by hydrolyzing keratinaceous material as described, and separating a water phase from solid keratinaceous material in a press, and drying the water phase to obtain a product in powder form, having an ileal and/or pepsin digestibility of more than 95%.

The resultant, still moist keratinaceous material needs to be dried to a moisture content of 12 wt% or less, preferably 8 wt% or less. Drying to an amount of water lower than 3 wt% generally is not necessary, but would not harm. Drying is most preferably performed till a moisture content of 4 to 8 wt%. The amount is stated relative to the total product.

Drying appears to be a crucial step in the quality of the keratinaceous material such as feather meal. It appears that common drying techniques cause the digestibility to be reduced considerably.

According to GePro, a company selling feather meal, flash drying (hot air drying) results in better in vitro digestibility. The ileal digestibility was found to be less than 85%. The pepsin digestibility 70% to 80%. Yet, further improvement is aimed for.

The present inventors found that further improvement was possible, by using for example a conventional disc dryer at reduced pressure and reduced temperature, or when for example using a fluidized bed dryer.

Thus, the present invention provides a method in which partly hydrolysed keratinaceous material is provided with higher in vitro and/or in vivo digestibility.

With the method of the present invention, it is possible to obtain hydrolysed, partly insoluble keratinaceous material with a moisture content of less than 8 wt% and an in vivo digestibility of the Total Nitrogen Matter of 80% or higher (digestibility measured on cecectomized roosters).

Preferably, the amount of lantionine in the hydrolysed keratinaceous material is 2 wt% or less, preferably 1.5 wt% or less, more preferably 1.2 wt% or less.

The hydrolysed keratinaceous material is at least partly insoluble in water, when 1 gram is put in 2 ml of water particles and fibrous material are seen with the eye. Nevertheless, it is possible to measure the molecular weight distribution of at least part of the keratinaceous material. The most commonly used method is HPLC with water/acetonitril as a solvent with a trilfuoroacetic acid (TFA; 0.1 wt%) and a SEC a column. The keratinaceous material may be better soluble, or completely soluble is said solvent. The partially hydrolysed material shows a broad peak. The molecular weight distribution is in this field generally not denoted as Mn/Mw, as not all material may be dissolved. It is anyhow possible to state which part of the material measured in the HPLC has a certain molecular weight.

In a preferred embodiment of the invention, the dissolved part of the hydrolysed keratinacious material consists for 70 wt% or more of material having a molecular weight of 5000 dalton or less, and more than 30 wt% of the materials has a molecular weight of 1000 dalton or less.

In another preferred embodiment, which may be combined with the embodiment in the preceding paragraph, the amount of material of a molecular weight higher than 5000 dalton is 10 wt% or more, preferably 20 wt% or more.

After the partial hydrolysation, the hydrolysed keratinaceous material is dried to a moisture content of 12 wt% or lower, or of 8% or lower, with a method allowing low heat damage. The low heat damage provides for a low or absent reduction in digestible material, and the final pepsin and/or ileal digestibility is still higher than 85%.

The drying preferably is performed in a dryer at a temperature/time/pressure combination which limits the drop in pepsin and/or ileal digestibility by less than 10%, and/or such that the ileal and/or pepsin digestibility remains higher than 90%.

Preferably, the drop in pepsin and/or ileal digestibility is 7% or less, more preferably 5% or less, and/or preferably, the pepsin digestibility remains 90% or higher, more preferably, 92% or higher.

The further drying is preferably done at reduced pressure, or in a fluidized bed dryer, such that the heat damage, measured as reduced digestibility is such that the final product still has an ileal and/or pepsin digestibility of more than 90%.

Achieving such low damage by heat is unprecedented in the production of feather meal, which production is already done for over 60 years (see e.g. US 2542984).

One of the steps to achieve such high digestibility is, to keep the keratinaceous material at a temperature below 90 °C, preferably below 80 °C. The upper value of the temperature is dependent on the time period that such high temperature is kept.

In one embodiment of the invention, the drying of step (ii) is performed at reduced pressure. Suitable pressure include a pressure below 0.5 bar (abs), preferably below 0.4 bar. At a pressure of 0.3 bar, water boils at 70 °C, and thereby the keratinaceous material largely remains at a temperature below such temperature. An even lower vacuum is also possible, but may have the disadvantage that such low vacuum is relatively expensive to keep. Hence, the reduced pressure generally will be a pressure higher than 10 mbar (abs), preferably at 100 mbar or higher.

In another embodiment, the drying process comprises effective turbulence of keratinaceous material, in a fluidized bed dryer or ring dryer. In such cases it is important to limit the heat exposure to a minimum.

Hence, the temperature/time window may be between 60 to 90°C and between 30 sec to 2 hr, being dependent on the damage done by heating the moist keratinaceous material.

The digestible keratinaceous material such as feather meal comprises at least 17 amino acids, such as very valuable amino acids like cysteine and tyrosine.

The dried product may be milled and/or agglomerated to a suitable particle size. The particles generally are smaller than a few mm, and larger than 20 µm, in order to have a free flowing powder that can be easily processed. Generally, the particle size will be between 0.01 and 2 mm.

The digestible keratinaceous material such as feather meal can be used as feed, or feed supplement, such as for example for petfood and/or for aquaculture, or as additive in cosmetics.

Dried highly digestible feather meal is in particular very useful for feed or feed additive, like as feed for fish.

### MEASUREMENT METHODS

The following methods were used in the examples, and are suitable as methods to measure the parameters stated in the description and the claims:

Weight percentage (wt%) moisture: the moist keratinaceous material is dried overnight in a vacuum stove at reduced pressure and with a siccative. The material is weighted before and after the drying step, and the amount of moisture is calculated with using the initial measured weight as 100% while assuming that all the volatile material is water.

HPLC and Mw determination: Standard HPLC equipment can be used. The solvent for the keratinaceous material is MilliQ water, acetonitrile and trifluoroacetic acid (TFA) at 0.1 wt%. As a column, a Tosoh Bioscience Silica Column TSK G2000 SWXL 5 µm and Tosoh Bioscience Guard Column TSK-Gel SWXL 7 µm can be used, or comparable columns. The mobile phase is a trifluoroacetic acid 0.1 wt%, containing 15% acetonitrile (CH₃CN). The recording is done with a UV detector at 214 nm. The column can be calibrated with a mixture of bacitracin, insulin, alpha-lacto-albumin, beta-lacto-globulin and tryptophan.

Solubility of the keratinaceous material is determined by dissolving 1 gram of keratinaceous material in 2 ml water of 20 °C. The transparency of the liquid is determined by the human eye.

Pepsin digestibility is measured according to ISO 6655 (August 1997); 0.02% pepsin.

Ileal digestibility (also named "Boisen digestibility") is measured according to S. Boisen, 2007 ("In vitro analysis for determining standardized ileal digestibility of protein and amino acids in actual batches of feedstuffs and diets for pigs"; Livestock Science (2007) 309:182-185.)

In vivo digestibility of the Total Nitrogen Matter has been determined on cecectomized roosters, according to Johnson et al., 1998. "Effects of species raw material source, ash content, and processing temperature on amino acid digestibility of animal by-product meals by cecectomized roosters and ileally cannulated dogs" Journal of Animal Science; 76:1112-1122.

The percentage lanthionine (abbreviated as LAN in the examples) is determined with standard HPLC methods.

### EXAMPLES

### Example 1 and comparative experiments A - C

In a hydrolyser, working at 7 bar and saturated steam, feathers from chicken with a moisture content of 65 wt% were treated for 25 min. The partly hydrolysed fibre was brought to atmospheric pressure through a let-down valve, and the fibrous mass, containing about 55% of water was pressed in a screw press , to remove water. The residual water in the feather meal was about 45 wt%.

The partly hydrolysed feather meal was dried in a number of different ways, with a classical disc dryer at 170 °C (8 bar pressure steam inside the disc), for about 1 hr, and for about 0.8 hr (both comparative experiments, according to the prior art), a hot air dryer (using a temperature of the air of for 80 sec at 270°C and for 120 sec at 80°C), and a disc dryer at 300 mbar pressure (abs). In the last mentioned drying method, the feather meal did not reach temperatures higher than about 70 °C.

**Table 1: characteristics of dried feather meal**

| | Comp Exp A | Comp Exp B | Comp Exp C | Example 2 |
|---|---|---|---|---|
| Process Characteristic | | | | |
| Hydrolyser | Batch | Continuous | Continuous | Continuous |
| Dryer | Disc; 1 hr | Disc; 0.8 hr | Hot air | Low temp disc (vacuum) |
| | | | | |

| Meal quality | | | | |
|---|---|---|---|---|
| Pepsin digestibility | 54 | 64 | 65 | 85 |
| Ileal digestibility | 74 | 81 | 84 | 93 |

| Molecular weight | | | | |
|---|---|---|---|---|
| <5000 | 84 | 88 | 82 | 85 |
| <1000 | 57 | 42 | 48 | 56 |
| <500 | 45 | 27 | 29 | 42 |
| Percentage LAN | 2.3 | 2.2 | Nd | 1.3 |
| Nd: not determined | | | | |

### Example 2

In a batch hydrolyser, working at 7 bar and saturated steam, feathers from chicken with a moisture content of 70 wt% were treated for 25 min. The partly hydrolysed fibre was brought to atmospheric pressure through a let-down valve, and the fibrous mass contained 65% of water.

The partly hydrolysed feather meal was dried in a fluidized bed dryer. The inlet temperature of the hot air was 140 °C; the outlet temperature was about 85 °C. The feather meal did not reach temperatures higher than about 80 °C for any substantial amount of time. Drying till a moisture content of about 7 wt% took about 8 min. The in-vivo digestibility of the Total Nitrogen Matter measured on cecectomized roosters was 82%.

### Conclusion

The examples are illustrative only, but the tests show that with the hydrolysis and drying as performed with the present invention, highly digestible keratinaceous meal, like feather meal is obtained.

## Claims

1. Method for producing digestible keratinaceous material, preferably feather, hair, hoof or nails, comprising the steps of hydrolysing keratinaceous material in the presence of water, in a hydrolyser with heat and at a pressure between 2 bar and 10 bar, and drying the resultant hydrolysed keratinaceous material comprising at least partly insoluble material in a dryer at a temperature such that the keratinaceous material remains at a temperature below 90 °C, preferably below 80 °C and at a temperature/time/pressure combination which limits the drop in pepsin and/or ileal digestibility by less than 10%, and/or such that the pepsin and/or ileal digestibility remains higher than 85%, wherein the resultant hydrolysed keratinaceous material, when 1 gram is put in 2 ml of water, is at least partly insoluble as particles and fibrous material are visible for the human eye.

2. The method according to claim 1, wherein the hydrolysis is performed in a continuous hydrolyser.

3. The method according to any one of the preceding claims, wherein the keratinaceous material is supplied to the hydrolyser with a moisture content of 30 to 80 wt% (relative to the weight of moisture plus keratinaceous material).

4. The method according to any one of the preceding claims, wherein the dryer is a disc dryer processing at reduced pressure, preferably at a pressure between 10 and 500 mbar (abs), preferably between 100 and 400 mbar.

5. The method according to any one of claims 1-3, wherein the drying is performed in a flow of hot air such as in a fluidized bed dryer, ring-type dryer, rotating flash dryers and the like.

6. The method according to any one of the preceding claims, wherein the dried digestible keratinaceous material has a moisture content of below 12 wt%, preferably between 4 and 8 wt%.

7. The method according to any one of the preceding claims, wherein an amount of more than 2 tons of keratinaceous material is processed per hour and the drying method is not a non-stirred/non-moving drying method.

8. The method according to any one of the preceding claims, wherein the drying step is performed at a temperature/time/pressure combination which limits the drop in pepsin and/or ileal digestibility by less than 7%, preferably less than 5%, and/or such that the pepsin and/or ileal digestibility remains higher than 90%, more preferably higher than 92%.

9. Hydrolysed, partly insoluble keratinaceous material, obtainable with the method of any one of claims 1-8, wherein the material has a moisture content of less than 12 wt% and an ileal and/or pepsin digestibility of 85% or higher, preferably 90% or higher or an in vivo digestibility of 80% or higher, preferably 82% or higher.

10. Hydrolysed, at least partly insoluble keratinaceous material according to claim 9, wherein the material has an amount of lanthionine of 2.0 wt% or less, preferably 1.5 wt% or less.

11. Hydrolysed, partly insoluble keratinaceous material according to any one of claims 9-10, wherein the soluble part of the hydrolysed keratinacious material comprises polypeptides in an amount of more than 70 wt% having a molecular weight of lower than 5000 dalton , and more than 30 wt% smaller than 1000 dalton.

12. Use of the hydrolysed, partly insoluble keratinaceous material according to any one of claims 9-11 as feed and/or feed additive, like in petfood or for aquaculture, or in cosmetics.

## Patentansprüche

1. Verfahren zum Herstellen von verdaulichem Hornmaterial, vorzugsweise von Federn, Haare, Hufe oder Nägel, umfassend die Schritte eines Hydrolysierens von Hommaterial in der Gegenwart von Wasser in einem Hydrolysator mit Wärme und unter einem Druck zwischen 2 bar und 10 bar und eines Trocknens des resultierenden hydrolysierten Hornmaterials, umfassend wenigstens zum Teil unlösliches Material, in einem Trockner bei einer derartigen Temperatur, dass das Hommaterial auf einer Temperatur unter 90 °C, vorzugsweise unter 80 °C, bleibt, und bei einer Kombination von Temperatur/Zeit/Druck, die den Abfall einer Pepsinverdaulichkeit und/oder ilealen Verdaulichkeit um weniger als 10 % einschränkt, und/oder derart, dass die Pepsinverdaulichkeit und/oder ileale Verdaulichkeit höher als 85 % bleibt, wobei das resultierende hydrolysierte Hornmaterial, wenn 1 Gramm in 2 ml Wasser gegeben wird, wenigstens zum Teil unlöslich ist, da Teilchen und faserartiges Material für das menschliche Auge sichtbar sind.

2. Verfahren nach Anspruch 1, wobei die Hydrolyse in einem kontinuierlichen Hydrolysator durchgeführt wird.

3. Verfahren nach einem der vorstehenden Ansprüche, wobei das Hornmaterial dem Hydrolyseur mit einem Feuchtigkeitsgehalt von 30 bis etwa 80 Gew.-% (relativ zu dem Gewicht der Feuchtigkeit plus dem Hornmaterial) zugeführt wird.

4. Verfahren nach einem der vorstehenden Ansprüche, wobei der Trockner ein Scheibentrockner ist, der unter reduziertem Druck, vorzugsweise bei einem Druck zwischen 10 und 500 mbar (abs), vorzugsweise zwischen 100 und 400 mbar, arbeitet.

5. Verfahren nach einem der Ansprüche 1 bis 3, wobei das Trocknen in einem Strom heißer Luft, wie in einem Wirbelschichttrockner, Ringtrockner, rotierenden Flashtrocknern und dergleichen, durchgeführt wird.

6. Verfahren nach einem der vorstehenden Ansprüche, wobei das getrocknete verdauliche Hommaterial einen Feuchtigkeitsgehalt von unter 12 Gew.-%, vorzugsweise zwischen 4 und 8 Gew.-%, aufweist.

7. Verfahren nach einem der vorstehenden Ansprüche, wobei eine Menge von mehr als 2 Tonnen Hommaterial pro Stunde verarbeitet wird und das Trocknungsverfahren kein ungerührtes/unbewegtes Trocknungsverfahren ist.

8. Verfahren nach einem der vorstehenden Ansprüche, wobei der Trocknungsschritt bei einer Kombination von Temperatur/Zeit/Druck, die den Abfall der Pepsinverdaulichkeit und/oder ilealen Verdaulichkeit um weniger als 7 %, vorzugsweise weniger als 5 %, einschränkt, und/oder derart, dass die Pepsinverdaulichkeit und/oder ileale Verdaulichkeit höher als 90 %, vorzugsweise höher als 92 %, bleibt, durchgeführt wird.

9. Hydrolysiertes, zum Teil unlösliches Hornmaterial, erhältlich mit dem Verfahren nach einem der Ansprüche 1 bis 8, wobei das Material einen Feuchtigkeitsgehalt von weniger als 12 Gew.-% und eine ileale und/oder Pepsinverdaulichkeit von 85 % oder mehr, vorzugsweise 90 % oder mehr, oder eine in-vivo-Verdaulichkeit von 80 % oder mehr, vorzugsweise 82 % oder mehr, aufweist.

10. Hydrolysiertes, wenigstens zum Teil unlösliches Hornmaterial nach Anspruch 9, wobei das Material eine Menge an Lanthionin von 2,0 Gew.-% oder weniger, vorzugsweise 1,5 Gew.-% oder weniger, aufweist.

11. Hydrolysiertes, zum Teil unlösliches Hornmaterial nach einem der Ansprüche 9 bis 10, wobei der lösliche Anteil des hydrolysierten Hommaterials Polypeptide in einer Menge von mehr als 70 Gew.-% mit einem Molekulargewicht von weniger als 5000 Dalton und bei mehr als 30 Gew.-% kleiner als 1000 Dalton umfasst.

12. Verwendung des hydrolysierten, zum Teil unlöslichen Hommaterials nach einem der Ansprüche 9 bis 11 als Futter und/oder Futterzusatz, wie in Tierfutter oder für die Aquakultur oder in Kosmetik.

## Revendications

1. Procédé de production de matière kératinique digestible, de préférence de plume, de poil, de sabot ou d'ongles, comprenant les étapes d'hydrolyse d'une matière kératinique en présence d'eau, dans un hydrolyseur avec de la chaleur et à une pression située entre 2 bar et 10 bar, et de séchage de la matière kératinique hydrolysée résultante comprenant une matière au moins partiellement insoluble dans un sécheur à une température telle que la matière kératinique reste à une température inférieure à 90 °C, de préférence inférieure à 80 °C et à une combinaison de température/temps/pression qui limite la chute de digestibilité de la pepsine et/ou iléale de moins de 10 %, et/ou telle que la digestibilité de la pepsine et/ou iléale reste supérieure à 85 %, la matière kératinique hydrolysée résultante, quand 1 gramme est placé dans 2 ml d'eau, est au moins partiellement insoluble car des particules et une matière fibreuse sont visibles par l'œil humain.

2. Procédé selon la revendication 1, dans lequel l'hydrolyse est effectuée dans un hydrolyseur continu.

3. Procédé selon l'une quelconque des revendications précédentes, dans lequel la matière kératinique est introduite dans l'hydrolyseur avec une teneur en humidité de 30 % à 80 % en poids (par rapport au poids de l'humidité plus la matière kératinique).

4. Procédé selon l'une quelconque des revendications précédentes, dans lequel le sécheur est un sécheur à disque fonctionnant à pression réduite, de préférence à une pression située entre 10 mbar et 500 mbar (abs), de préférence entre 100 mbar et 400 mbar.

5. Procédé selon l'une quelconque des revendications 1 à 3, dans lequel le séchage est réalisé dans un flux d'air chaud, comme dans un sécheur à lit fluidisé, un sécheur annulaire, un sécheur pneumatique à rotation et semblables.

6. Procédé selon l'une quelconque des revendications précédentes, dans lequel la matière kératinique digestible sèche présente une teneur en humidité inférieure à 12 % en poids, de préférence entre 4 % et 8 % en poids.

7. Procédé selon l'une quelconque des revendications précédentes, dans lequel une quantité de plus de 2 tonnes de matière kératinique est traitée par heure et le procédé de séchage n'est pas un procédé de séchage sans agitation/sans mouvement.

8. Procédé selon l'une quelconque des revendications précédentes, dans lequel l'étape de séchage est réalisée à une combinaison température/temps/pression qui limite la chute de digestibilité de la pepsine et/ou iléale de moins de 7 %, de préférence de moins de 5 %, et/ou telle que la digestibilité de la pepsine et/ou iléale reste supérieure à 90 %, et de manière davantage préférée supérieure à 92 %.

9. Matière kératinique hydrolysée partiellement insoluble, pouvant être obtenue avec le procédé selon l'une quelconque des revendications 1 à 8, dans laquelle la matière présente une teneur en humidité inférieure à 12 % en poids et une digestibilité de la pepsine et/ou iléale supérieure ou égale à 85 %, de préférence supérieure ou égale à 90 %, ou une digestibilité *in vivo* supérieure ou égale à 80 %, de préférence supérieure ou égale à 82 %.

10. Matière kératinique hydrolysée, au moins partiellement insoluble, selon la revendication 9, dans laquelle la matière présente une quantité de lanthionine inférieure ou égale à 2,0 % en poids, de préférence inférieure ou égale à 1,5 % en poids.

11. Matière kératinique hydrolysée partiellement insoluble selon l'une quelconque des revendications 9 à 10, dans laquelle la partie soluble de la matière kératinique hydrolysée comprend des polypeptides en une quantité de plus de 70 % en poids ayant un poids moléculaire inférieur à 5 000 daltons, et de plus de 30 % en poids inférieur à 1 000 daltons.

12. Utilisation de la matière kératinique hydrolysée partiellement insoluble selon l'une quelconque des revendications 9 à 11, comme aliment et/ou additif alimentaire, comme dans la nourriture pour animaux ou pour l'aquaculture, ou dans les cosmétiques.
